(19) Europäisches Patentamt / European Patent Office / Office européen des brevets

(11) **EP 3 438 603 A1**

(12) **EUROPEAN PATENT APPLICATION**
published in accordance with Art. 153(4) EPC

(43) Date of publication:
**06.02.2019 Bulletin 2019/06**

(21) Application number: **17773910.9**

(22) Date of filing: **23.02.2017**

(51) Int Cl.:
*G01B 11/245* (2006.01)    *B60G 23/00* (2006.01)
*G01B 11/30* (2006.01)    *G06T 1/00* (2006.01)

(86) International application number:
**PCT/JP2017/006867**

(87) International publication number:
**WO 2017/169365 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.03.2016 JP 2016066505**

(71) Applicant: **KYB Corporation**
**Tokyo 105-6111 (JP)**

(72) Inventors:
• **OUCHIDA, Shun**
**Tokyo 105-6111 (JP)**
• **HASEBE, Atsutoshi**
**Tokyo 105-6111 (JP)**
• **KIKUCHI, Takayoshi**
**Tokyo 105-6111 (JP)**

(74) Representative: **Markfort, Iris-Anne Lucie**
**Lorenz & Kollegen**
**Patentanwälte Partnerschaftsgesellschaft mbB**
**Alte Ulmer Straße 2**
**89522 Heidenheim (DE)**

(54) **ROAD SURFACE DISPLACEMENT DETECTION DEVICE AND SUSPENSION CONTROL METHOD**

(57)    In this road surface displacement detection device, for each frame of an image obtained by a stereo camera that images a road surface in a movement direction of an object such as a vehicle, for example, an arithmetic processing circuit detects heights of the road surface at a plurality of points for detection at different distances from the stereo camera, and superimposes information about the heights at the plurality of points for detection, which are detected for a plurality of frames, on each other while considering a movement distance of the object between the plurality of frames.

FIG.8B

**Description**

Technical Field

The present invention relates to a road surface displacement detection device that detects a height of a road surface by using a stereo camera and to a suspension control method for a vehicle.

Background Art

As a control method for an active suspension system, there is preview control to suitably control various characteristics of the suspension by detecting a condition of a road surface in front of a vehicle. As a method of detecting the condition of the road surface in front of the vehicle, there is known a stereo method using parallax information of images of the road surface in front of the vehicle which are taken by two cameras.
As a method of detecting a difference in level of a road surface by using this stereo method, for example, Patent Literature 1 describes a technology configured to: project a first image and a second image in which a road surface is stereoscopically imaged on an XY plane coordinate system; set a detection area centering prescribed coordinates (X, Y) on the plane coordinate system; calculate a parallax v1 when an image of the detection area is on a road surface position; set a comparison area centering coordinates (X-v1, Y) obtained by subtracting the parallax v1 from the second image; and compare the image of the detection area with the image of the comparison area to obtain a height from a road surface of the detection area.

Citation List

Patent Literature

Patent Literature 1: Japanese Patent Application Laid-open No. 2014-89548

Disclosure of Invention

Technical Problem

However, when the height of the road surface is detected by using the stereo method above while the vehicle is traveling, due to, for example, limitation on the speed of an arithmetic processing circuit, the number of points for detection that can be calculated from an image of one frame is also naturally limited. In a case where the number of points for detection that can be calculated from the image of the one frame is small, only a coarse approximate value can be obtained for a real value of displacement of the road surface. Thus, the accuracy of the preview control on the suspension system cannot be obtained correspondingly.
By using a high-speed arithmetic processing circuit, the number of points for detection that can be calculated from the image of the one frame can be increased as much as possible. However, the manufacture cost increases correspondingly. Further, as the traveling speed becomes higher, there is still a possibility that the number of points for detection that can be calculated from the image of the one frame may decrease due to the limitation on the speed of the arithmetic processing circuit. Thus, there is a problem that it is difficult to achieve highly accurate preview control in a high-speed range.
In view of the above-mentioned circumstances, it is an object of the present invention to provide a road surface displacement detection device and a suspension control method by which road surface displacement information highly accurate and highly dense in a distance resolution from the stereo camera can be generated irrespective of the speed of the arithmetic processing circuit.

Solution to Problem

In order to accomplish the above-mentioned object, a road surface displacement detection device according to an embodiment of the present invention includes:

a stereo camera that images a road surface in a movement direction of an object; and
an arithmetic processing circuit that detects, for each frame of an image obtained by the stereo camera, heights of the road surface at a plurality of points for detection at different distances from the stereo camera and superimposes information about the heights at the plurality of points for detection, which are each detected for a plurality of frames, on each other while considering a movement distance of the object between the plurality of frames.

In the road surface displacement detection device according to the present invention, the arithmetic processing circuit detects, for each frame, the heights of the road surface at the plurality of points for detection at the different distances from the stereo camera, and the information about the heights at the plurality of points for detection, which are detected for the plurality of frames, is superimposed on each other while considering the movement distance of the object between the plurality of frames. Thus, the road surface displacement information highly accurate and highly dense in the distance resolution from the stereo camera can be generated irrespective of the speed of the arithmetic processing circuit.

Further, the arithmetic processing circuit may be configured to detect heights of a plurality of points for detection from the road surface on a predictive movement track of the object.

By detecting the height of the road surface only on the predictive movement track of the object, the load of the arithmetic processing circuit can be reduced.

Further, the arithmetic processing circuit may be configured to give priority to information about a height detected from a latest frame when superimposing the information about the heights of the plurality of points for detection, which are each detected for the plurality of frames, on each other while considering the movement distance of the object between the plurality of frames.

In the detection of the height of the road surface using the stereo method, as the distance from the stereo camera to the point for detection becomes smaller, more highly accurate detection becomes possible. Therefore, in a case where the point for detection whose height is detected from the latest frame and the point for detection whose height is detected from other, one or more frames are at the same position on the road surface, more highly accurate road surface displacement information can be obtained by preferentially employing the information about the height detected from the latest frame.

Further, the arithmetic processing circuit may be configured to vary a cycle of the frame on a basis of the movement speed of the object.

Alternatively, the arithmetic processing circuit may be configured to vary the number of points for detection for each frame on a basis of the movement speed of the object.

Further, the arithmetic processing circuit may be configured to
calculate, on a basis of a parallax of a plurality of images taken by the stereo camera, a distance D between the stereo camera and the point for detection while not considering a mounting angle $\theta c$ of the stereo camera in a two-dimensional space of a height and a distance,
calculate an angle $\theta$ forming an optical axis of the stereo camera and a straight line obtained by linking the stereo camera and the point for detection in the two-dimensional space,
calculate a distance D1 between the stereo camera and the point for detection while considering the mounting angle $\theta c$ in the two-dimensional space by using the distance D and the angle $\theta$, and
calculate a height of the road surface at the point for detection by using a height of the stereo camera from the road surface, the distance D1, the mounting angle $\theta c$, and the angle $\theta$.

In addition, the arithmetic processing circuit may be configured to
calculate, on a basis of a parallax of a plurality of images taken by the stereo camera, a distance D between the stereo camera and the point for detection while not considering a mounting angle $\theta c$ of the stereo camera in a two-dimensional space of a height and a distance,
calculate a distance D1 between the stereo camera and the point for detection while considering a position of the point for detection on the image in a three-dimensional space,
calculate an angle $\theta$ formed by an optical axis of the stereo camera and a straight line obtained by linking the stereo camera and the point for detection in the two-dimensional space, on a basis of the calculated distance D and the calculated distance D1,
and
calculate a height of the road surface at the point for detection by using a height of the stereo camera from the road surface, the distance D1, the mounting angle $\theta c$, and the angle $\theta$.

Further, a suspension control method according to an another embodiment of the present invention includes:

detecting, for each frame of a plurality of images obtained in synchronization with each other by a stereo camera that images a road surface in front of a vehicle, heights of the road surface at a plurality of points for detection at different distances from the stereo camera;
superimposing information about the heights at the plurality of points for detection, which are each detected for a plurality of frames, on each other while considering a movement distance of the vehicle between the plurality of frames; and
controlling a suspension of the vehicle on a basis of the information about the heights, which is superimposed on each other.

In accordance with the present invention, the road surface displacement information highly accurate and highly dense in the distance resolution from the stereo camera can be generated irrespective of the speed of the arithmetic processing circuit.

Brief Description of Drawings

[Fig. 1] A diagram showing a stereo camera and a road surface including a point for detection from above.

[Fig. 2] A diagram showing the stereo camera and the road surface including the point for detection from the side.

[Fig. 3] A block diagram showing a configuration of a road surface displacement detection device 1 of an embodiment according to the present invention.

[Fig. 4] A diagram showing predictive tire traveling tracks in an image space.

[Fig. 5] A diagram showing a plurality of points for detection in a coordinate space of an image.

[Fig. 6] A diagram showing another setting method for the plurality of points for detection in the coordinate space of the image.

[Fig. 7] A flowchart showing a procedure of road surface displacement detection by the road surface displacement detection device 1 of this embodiment.

[Fig. 8A] A diagram showing road surface displacement information of a plurality of points for detection which are calculated from a first frame.

[Fig. 8B] A diagram showing a result of superimposing road surface displacement information of a plurality of points for detection which are calculated from a second frame on the road surface displacement information of the plurality of points for detection which are calculated from the first frame while considering a movement distance of a vehicle between the frames.

[Fig. 8C] A diagram showing a result of superimposing the road surface displacement information of the plurality of points for detection which are calculated from the third frame on road surface displacement information saved in a memory while considering the movement distance of the vehicle between the frames.

[Fig. 9] A diagram describing an output method for the road surface displacement information in a case where the road surface displacement detection device 1 of this embodiment is applied to preview control on a semi-active suspension.

[Fig. 10] An explanatory diagram of a modified example 1 of a calculation method for a height of the point for detection on the road surface.

[Fig. 11] A flowchart of the height calculation method of Fig. 10.

[Fig. 12] A diagram for describing a calculation method for $\theta$ in the height calculation method of Fig. 10.

[Fig. 13] A flowchart of a modified example 2 of the calculation method for the height of the point for detection on the road surface.

[Fig. 14] A diagram showing a space having a square pyramid shape which is formed by an image plane and a vanishing point obliquely from above for describing a method of converting coordinates of points for detection on an image into coordinates of a three-dimensional space of a rectangular coordinate system.

[Fig. 15] A diagram showing the space having the square pyramid shape which is formed by the image plane and the vanishing point and a part of the three-dimensional space of the rectangular coordinate system from the side.

Mode(s) for Carrying Out the Invention

Hereinafter, a road surface displacement detection device and a road surface displacement detection method that are embodiments according to the present invention will be described with reference to the drawings.

[Outline]

The road surface displacement detection device of this embodiment is an apparatus that detects irregularities of a road surface on which a vehicle travels by using a plurality of images taken by a stereo camera in accordance with a stereo method.

The stereo camera includes a plurality of cameras, for example, two cameras. The plurality of cameras each use a space in front of the vehicle as an imaging range. The plurality of cameras are spaced apart from each other such that a parallax can be generated. The plurality of cameras are arranged such that optical axes thereof are parallel.

Images respectively taken by the plurality of cameras are processed by an arithmetic processing circuit. The arithmetic processing circuit calculates a distance from the stereo camera to a point for detection of the road surface on the basis of the images, parameter information of the cameras, and parallax information obtained from the images. The arithmetic processing circuit calculates a height of the point for detection on the road surface (road surface displacement amount) on the basis of the calculated distance.

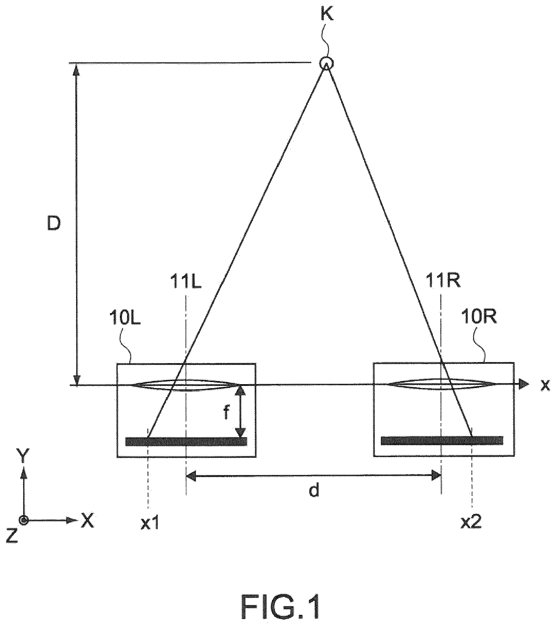

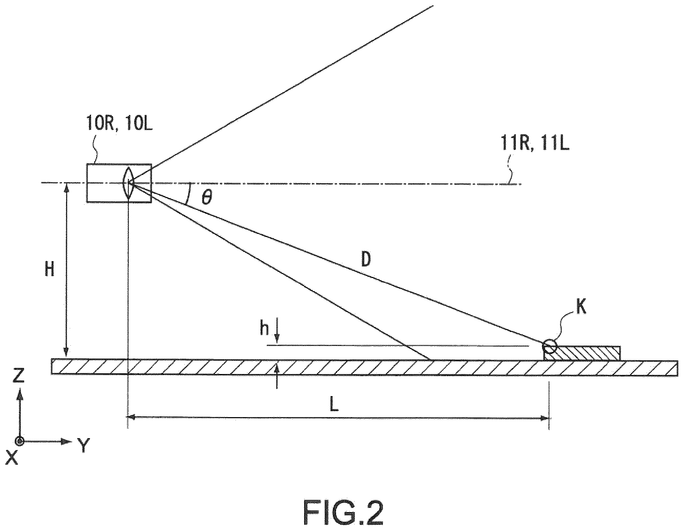

Figs. 1 and 2 are explanatory diagrams of a calculation method for a distance from the stereo camera to a point for detection on the road surface and heights. Fig. 1 is a diagram showing the cameras and the road surface including the point for detection in a top view. Fig. 2 is a diagram showing the cameras and the road surface including the point for detection in a side view.

In Fig. 1, a point for detection K of the road surface can be seen in a direction downwardly inclined from optical axes 11R, 11L of cameras 10R, 10L by an angle θ as shown in Fig. 2. A distance D from the cameras 10R, 10L to the point for detection K is calculated in accordance with Expression 1 below.

$$D = (d*f)/(x1 - x2) \qquad \ldots (1)$$

Where d denotes a distance between the cameras and f denotes a focal distance of a lens. Further, x1 - x2 denotes a parallax, x1 denotes a value of an x-coordinate of an image of the point for detection K in an image of the one camera 10R, and x2 denotes a value of an x-coordinate of an image of the point for detection K in an image of the other camera 10L.

In a case where directions of the optical axes 11R, 11L of the cameras 10R, 10L are horizontal, a distance L from the cameras 10R, 10L to the point for detection K in a horizontal direction (Y-axis direction) is calculated as follows:

$$L = D\cos\theta \qquad \ldots (2).$$

Further, a height h of the point for detection K is calculated as follows:

$$h = H - D\sin\theta \qquad \ldots (3).$$

Where H denotes a height of the optical axes 11R, 11L of the cameras 10R, 10L from the road surface.

In this manner, in accordance with the stereo method, the distance L from the stereo camera to the points for detection K on the road surface and the height h can be calculated as the road surface displacement information.

In a case where the road surface displacement information calculated in accordance with the above-mentioned road surface displacement detection method is used for preview control on an active suspension of the vehicle or the like, for example, due to the limit on the speed of the arithmetic processing circuit and the like, also a distance resolution of the road surface displacement information that can be calculated from one frame is also limited.

In order to solve such a problem, a road surface displacement detection device 1 that is a best mode according to the present invention includes:

a stereo camera 10 that images a road surface in front of a vehicle; and
an arithmetic processing circuit 20 that detects, on the basis of a plurality of images obtained by the stereo camera 10, for each frame, a height of a road surface at each of a plurality of points for detection at different distances from the stereo camera 10, and superimposes information about heights of the plurality of points for detection, which are each detected from a plurality of frames, on each other while considering a movement distance of the vehicle between the plurality of frames.

Hereinafter, a configuration of the road surface displacement detection device that is the best mode according to the present invention will be described in more detail.

[Configuration of Road Surface Displacement Detection Device of This Embodiment]

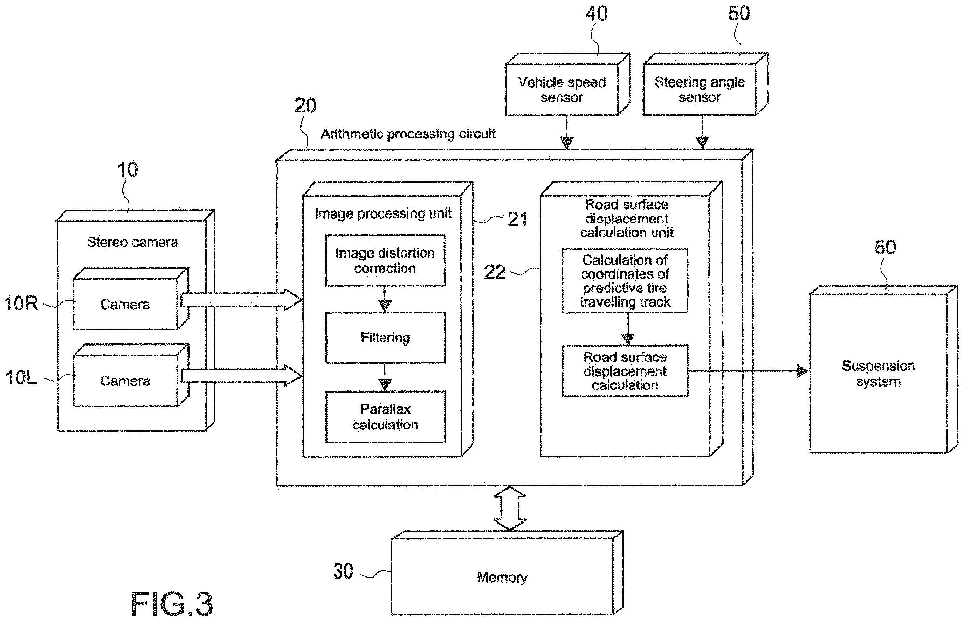

Fig. 3 is a block diagram showing a configuration of the road surface displacement detection device 1 of this embodiment.

As shown in the figure, the road surface displacement detection device 1 of this embodiment includes the stereo camera 10, the arithmetic processing circuit 20, and a memory 30. It should be noted that the memory 30 may be provided inside the arithmetic processing circuit 20.

The stereo camera 10 includes two cameras 10R, 10L. The two cameras 10R, 10L use an imaging range in front of the vehicle. The two cameras 10R, 10L are spaced apart from each other such that a parallax can be generated. The two cameras 10R, 10L are arranged such that optical axes thereof are parallel. The cameras 10R, 10L include image pickup elements such as a charge-coupled device (CCD) and a complementary metal oxide semiconductor (CMOS). Imaging signals each obtained by each of the cameras 10R, 10L are supplied to the arithmetic processing circuit 20.

The arithmetic processing circuit 20 is a device that performs arithmetic processing for road surface displacement detection by using the memory 30. The arithmetic processing circuit 20 includes, for example, a field-programmable gate array (FPGA) and the like, though not limited thereto. The arithmetic processing circuit 20 includes, for example, another integrated circuit such as an application specific integrated circuit (ASIC).

The arithmetic processing circuit 20 functionally includes an image processing unit 21 and a road surface displacement calculation unit 22.

The image processing unit 21 digitizes two video signals supplied from the stereo camera 10 as images and performs filtering and the like such as distortion correction of each image and noise cancelling from each image as preprocessing. In addition, the image processing unit 21 searches for a correspondence between the images by using the one image subjected to the preprocessing as a reference image and using the other image as a comparison image, and generates parallax information of the two images.

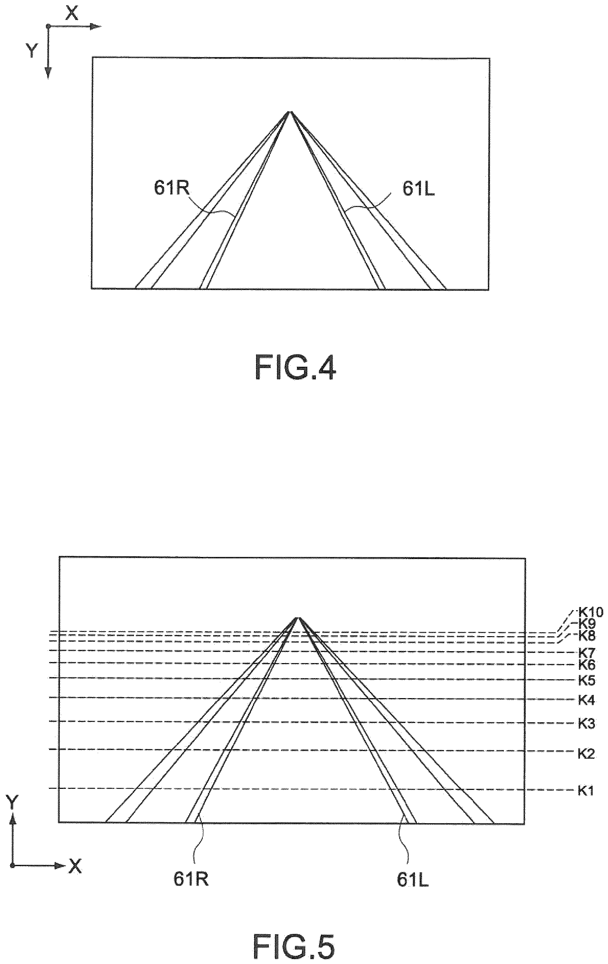

The road surface displacement calculation unit 22 calculates coordinates of two predictive tire traveling tracks, which the left and right tires of the vehicle are predicted to follow thereafter, in an image space of the stereo camera 10. Fig. 4 is a diagram showing the predictive tire traveling tracks in the image space. Those predictive tire traveling tracks 61R, 61L are only need to be determined as approximate positions including margins on the basis of a distance between the left and right tires of the vehicle, the position of the stereo camera 10, and the like. Further, the road surface displacement calculation unit 22 is also capable of calculating the predictive tire traveling tracks 61R, 61L on the basis of steering angle information of the vehicle which is detected by a steering angle sensor 50 provided in the vehicle.

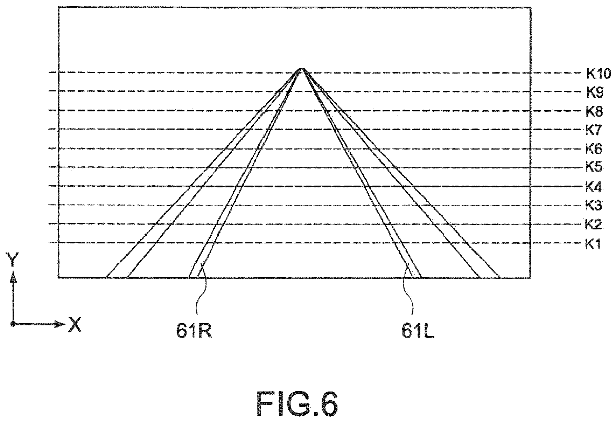

The road surface displacement calculation unit 22 calculates, in the calculated predictive tire traveling tracks, heights of the road surface at a plurality of points for detection at different distances L from the stereo camera 10 by using the parallax information. Fig. 5 is a diagram showing a plurality of points for detection in a coordinate space of the image. Provided that the road surface displacement amount is zero, for example, a plurality of points for detection K1 to K10 may be set in intervals such that the road surface is divided at approximately equal distances. Alternatively, as shown in Fig. 6, in view of the characteristic of the stereo method in that the point for detection has a higher accuracy as it becomes closer to the stereo camera 10, the plurality of points for detection K1 to K10 may be set such that the interval becomes smaller as the distance L from the stereo camera 10 becomes smaller.

The road surface displacement calculation unit 22 detects, for each frame, the height h of the road surface at each of the plurality of points for detection K1 to K10 at the different distances L from the stereo camera 10, superimposes information about the heights h of the plurality of points for detection K1 to K10 detected from each of the plurality of frames on each other while considering a movement distance of the vehicle between the plurality of frames, and generates road surface displacement information for preview control on a suspension system 60 on the basis of a result of superimposing.

[Operation of Road Surface Displacement Detection Device 1]

Next, an operation of road surface displacement detection by the road surface displacement detection device 1 of this embodiment will be described.

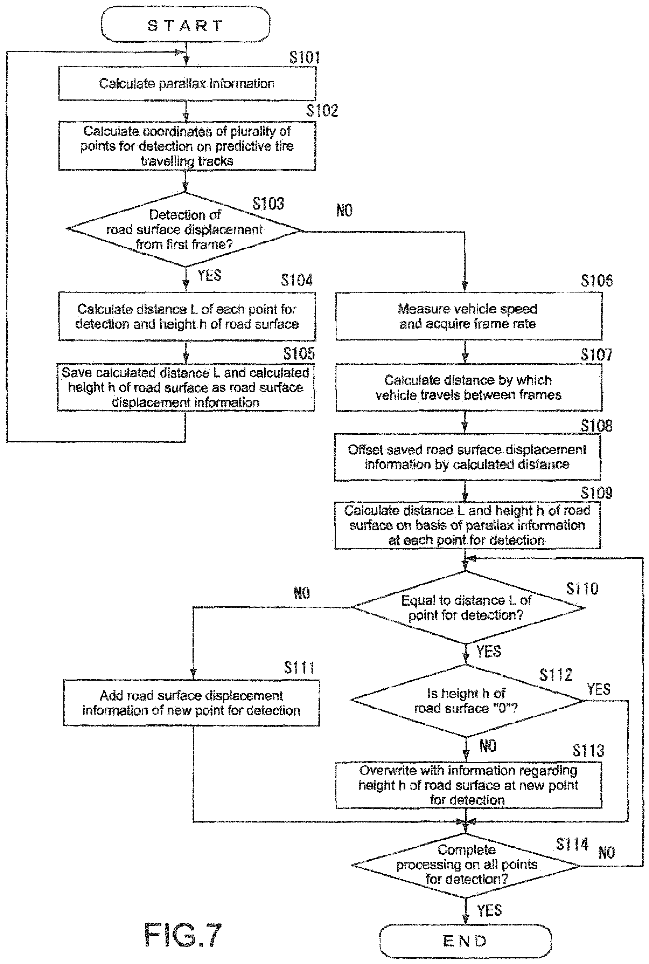

Fig. 7 is a flowchart showing a procedure of the road surface displacement detection by the road surface displacement detection device 1 of this embodiment.

First of all, imaging signals respectively captured by the two cameras 10R, 10L of the stereo camera 10 are supplied to the arithmetic processing circuit 20. The arithmetic processing circuit 20 performs filtering such as distortion correction and noise cancelling on each of the imaging signals as preprocessing at the image processing unit 21. Thereafter, the arithmetic processing circuit 20 generates parallax information of the two images by searching for a correspondence between the two images and saves it as parallax information of a first frame in the memory 30 (Step S101).

Here, the first frame means a head frame of the plurality of frames whose road surface displacement information is superimposed on each other while considering the movement distance of the vehicle between the frames. Hereinafter, a frame subsequent to the head frame will be referred to as a "second frame" and a frame subsequent thereto will be referred to as a "third frame". It should be noted that the present invention is not limited to the one using the three frames as objects for which the road surface displacement information is superimposed on each other. The number of frames as objects for which the road surface displacement information is superimposed on each other only needs to be two or more.

Next, the road surface displacement calculation unit 22 calculates coordinates of the predictive tire traveling tracks in the coordinate space of the image and calculates coordinates of the plurality of points for detection at the different distances L from the stereo camera 10 on those predictive tire traveling tracks (Step S102).

If this detection is detection of a road surface displacement from the first frame (YES in Step S103), the road surface displacement calculation unit 22 reads the parallax information corresponding to the coordinates of each of the points for detection on the predictive tire traveling tracks from the memory 30, calculates the distance L of each points for detection from the stereo camera 10 and the height h of the road surface at each points for detection on the basis of this parallax information (Step S104), and saves them in the memory 30 as the road surface displacement information with respect to the first frame (Step S105).

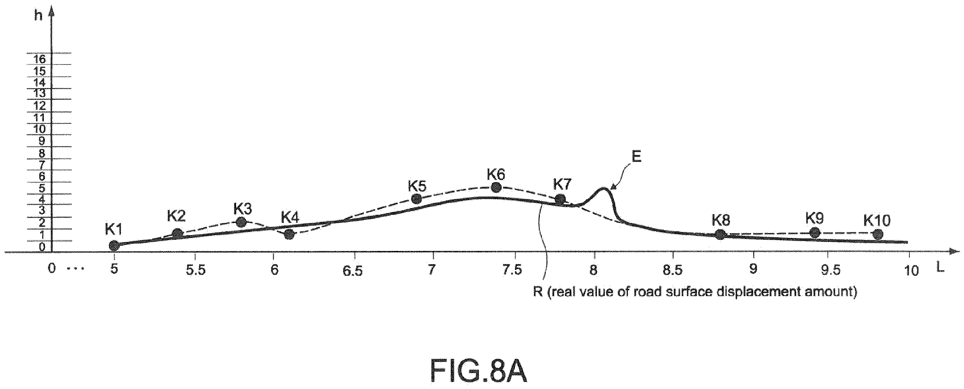

Fig. 8(A) is a road surface displacement profile showing, together with a real value R of the road surface displacement amount, the road surface displacement information of the plurality of points for detection K1 to K10 calculated from the first frame in a road surface region extending from a distance of about 5 m to a distance of about 10 m in front of the stereo camera 10 by plotting it to a space with the distance L from the stereo camera 10 allocated to the horizontal axis and the height h of the road surface allocated to the vertical axis.

As can be seen by comparing the road surface displacement information of the plurality of points for detection K1 to K10 of this road surface displacement profile with the real value R shown as the solid line of the figure, a resolution in a distance L direction of the road surface displacement information is limited due to limitation on the speed of the arithmetic processing circuit 20. Thus, as a result, a detection error E of the road surface displacement due to a protrusion on the road surface has happened.

In a cycle of the road surface displacement detection with respect to the second frame, the road surface displacement calculation unit 22 calculates coordinates of the plurality of points for detection at the different distances L from the stereo camera 10 on the predictive tire traveling tracks (Step S102), and thereafter, acquires vehicle speed information from a vehicle speed sensor 40 and acquires the frame rate of the stereo camera 10 (Step S106), and calculates a distance by which the vehicle has traveled between the frames on the basis of the vehicle speed information and the frame rate (Step S107). It should be noted that the frame rate is 30 fps, 60 fps, or the like, for example.

Next, in order to superimpose the road surface displacement information calculated from the first frame and the road surface displacement information of a plurality of points for detection K1' to K10' calculated from the second frame on each other while considering the movement distance of the vehicle between the frames, the road surface displacement calculation unit 22 offsets the road surface displacement information of the plurality of points for detection K1 to K10 saved in the memory 30 by the distance by which the vehicle has traveled between the frames (Step S108). For example, if the vehicle has traveled by 0.5 m between the frames, the road surface displacement calculation unit 22 offsets the road surface displacement information of the plurality of points for detection K1 to K10 saved in the memory 30 by 0.5 m. That is, the distances L of all the points for detection K1 to K10 of the road surface displacement information saved in the memory 30 are updated to values obtained by subtracting 0.5 m from the distances L. At this time, the distance from the stereo camera 10 out of the information about the points for detection included in the road surface displacement information saved in the memory 30 is deleted from the memory 30 because information about the points for detection (K1, K2) within a range of 5 m to 5.5 m becomes unnecessary.

It should be noted that the deletion of the unnecessary road surface displacement information due to the update of the road surface displacement information does not need to be necessarily performed. In a manner that depends on the purposes of the road surface displacement information, the generated road surface displacement information may be all saved.

Next, with respect to the second frame, the road surface displacement calculation unit 22 reads, from the memory 30, parallax information corresponding to coordinates of the plurality of points for detection K1' to K10' at the different distances L from the stereo camera 10 on the predictive tire traveling tracks, and calculates the distance L from the stereo camera 10 and the height h of the road surface at each of points for detection K1' to K10' on the basis of this parallax information (Step S109).

Next, the road surface displacement calculation unit 22 superimposes the road surface displacement information of the plurality of points for detection K1' to K10' calculated from the second frame on the road surface displacement information saved in the memory 30, that is, the road surface displacement information of the plurality of points for detection K3 to K10 calculated from the first frame while considering the movement distance of the vehicle between the frames.

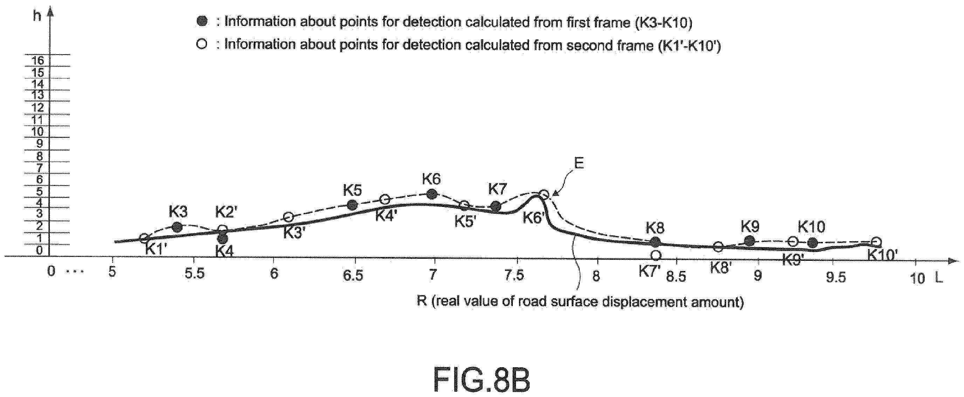

Fig. 8B is a diagram showing a result of superimposing the road surface displacement information of the plurality of points for detection K1' to K10' calculated from the second frame on the road surface displacement information of the plurality of points for detection K3 to K10 calculated from the first frame while considering the movement distance of the vehicle between the frames.

At this time, the road surface displacement calculation unit 22 performs the following processing relating to the road surface displacement information of each of the points for detection K1' to K10' calculated from the second frame. With respect to each of the points for detection K1' to K10', the road surface displacement calculation unit 22 determines whether or not the distance L from the stereo camera 10 is equal to each of the distance L to any of the points for detection K3 to K10 of the road surface displacement information saved in the memory 30 (Step S110). It should be noted that the fact that the distance L to the point for detection calculated from the first frame is equal to the distance L to the point for detection calculated from the second frame means that the positions of the respective points for detection on the road surface are the same.

As a result, if the distance L to the points for detection K1' to K10' calculated from the second frame is not equal to the distance L to any of the points for detection K3 to K10 included in the road surface displacement information saved in the memory 30, the road surface displacement calculation unit 22 adds the road surface displacement information of each of the points for detection K1' to K10' calculated from the second frame for superimposing it on the road surface displacement information saved in the memory 30, that is, the road surface displacement information of the plurality of points for detection K3 to K10 calculated from the first frame (Step S111).

Further, if the road surface displacement information of each of the points for detection K1' to K10' calculated from the second frame includes one equal to the distance L to the points for detection K3 to K10 of the road surface displacement information saved in the memory 30, the road surface displacement calculation unit 22 determines whether or not the height h of the road surface at the corresponding point for detection calculated from the second frame is "0" (Step S112). If the height h of the road surface of that point for detection is not "0", the road surface displacement calculation unit 22 overwrites the information about the height h of the road surface at the points for detection at the equal distance L saved in the memory 30 with the information about the height h of the road surface at that point for detection (Step S113).

For example, in the example of Fig. 8B, the distance L to a point for detection K4 calculated from the first frame is equal to the distance L at a point for detection K2' calculated from the second frame. Thus, the information about the height h of the road surface at the point for detection K4 is updated by the information about the height h of the road surface at the point for detection K2'. Similarly, the distance L to the point for detection K8 calculated from the first frame is equal to the distance L of the point for detection K7' calculated from the second frame, and the information about the height h of the road surface at the point for detection K8 is overwritten with the information about the height h of the road surface at the point for detection K7'.

In the height detection of the road surface using the stereo method, as the distance from the stereo camera 10 to the point for detection becomes smaller, more highly accurate detection becomes possible. Therefore, if the distance L of the point for detection of the latest frame is equal to the distance L of the point for detection of the previous frame, the accuracy can be improved by preferentially employing the information about the height h at the point for detection of the latest frame.

It should be noted that it is needless to say that a predetermined margin is considered for the determination as to whether or not the points for detection are at the equal distance L. Further, in the height detection of the road surface using the stereo method, as the distance L from the stereo camera 10 to the point for detection becomes smaller, more highly accurate detection becomes possible. Thus, for a point for detection at a smaller distance L from the stereo camera 10, overwriting of the information about the height h of the road surface may be configured to more easily occur. This control can be realized by varying the magnitude of the margin for the determination as to whether or not the points for detection are at the equal distance L, for example, in a manner that depends on the distance L.

Further, in this road surface displacement detection device 1, if the height h of the road surface takes an excessively large value due to a measurement error, the excessively large value is modified to "0". Thus, for example, as shown in Fig. 8B, even if the distance L to the point for detection K7' calculated from the second frame is the same as the distance L to the point for detection K8 calculated from the first frame, in a case where the height h of the road surface at the point for detection K7' calculated from the second frame is "0", overwriting of the information about the height h is configured not to be performed.

The road surface displacement calculation unit 22 repeats the above-mentioned processing relating to all the points for detection K1' to K10' calculated from the second frame. When the processing on all the points for detection K1' to K10' is completed, the processing with respect to the second frame is terminated.

After that, processing on a next third frame is similarly performed.

That is, in order to superimpose the road surface displacement information saved in the memory 30 and the road surface displacement information of the plurality of points for detection K1" to K10" calculated from the third frame on each other while considering the movement distance of the vehicle between the frames (between the second frame and the third frame), the road surface displacement calculation unit 22 offsets the road surface displacement information of the plurality of points for detection K1', K3, K2', ..., K10' which have been saved in the memory 30 by the distance by which the vehicle has traveled between the frames (Step S108).

Next, with respect to the third frame, the road surface displacement calculation unit 22 reads the parallax information corresponding to the coordinates of the plurality of points for detection K1" to K10" at the different distances L from the stereo camera 10 on the predictive tire traveling tracks from the memory 30 and calculates the distance L from the stereo camera 10 and the height h of the road surface of each of the point for detection K1" to K10" on the basis of this parallax information (Step S109).

Next, the road surface displacement calculation unit 22 superimposes the road surface displacement information of the plurality of points for detection K1" to K10" calculated from the third frame on the road surface displacement information saved in the memory 30 while considering the movement distance of the vehicle between the frames (between the second frame and the third frame).

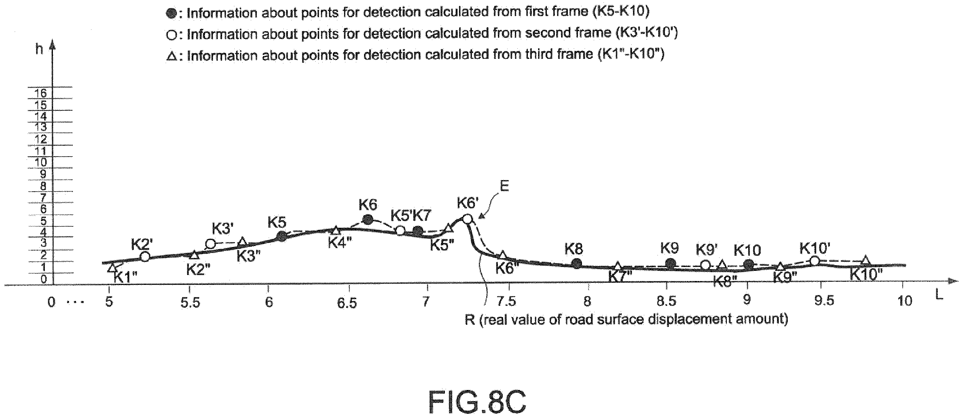

Fig. 8C is a diagram showing a result of superimposing road surface displacement information of a plurality of points for detection K1" to K10" calculated from the third frame on the road surface displacement information saved in the memory 30 while considering the movement distance of the vehicle between the frames (between the second frame and the third frame).

In this manner, as the number of frames for which the road surface displacement information is superimposed on each other becomes larger, the number of pieces of road surface displacement information at the points for detection saved in the memory 30 becomes larger, and highly dense road surface displacement information is obtained in a distance resolution from the stereo camera 10.

By repeating the above-mentioned processing in a frame cycle, highly dense road surface displacement information of the road surface in front of the vehicle is continuously obtained. Thus, highly accurate road surface displacement information can be obtained. For example, a probability that a detection error of the height h of the road surface will happen can be lowered.

The road surface displacement information obtained by the road surface displacement calculation unit 22 is supplied to the suspension system 60 of the vehicle and is used for preview control on the active suspension.

[Supplements, etc.]

(Regarding Frame Cycle)

Although in the above-mentioned embodiment, the road surface displacement information is generated from all successive frames, the road surface displacement information may be generated in a frame cycle of 1/N. Here, although N may be a fixed value, it may be varied in a manner that depends on the vehicle speed. In this case, a value of N is made smaller in inverse proportion to the vehicle speed. When the vehicle speed is extremely low, the generation of the road surface displacement information may be stopped.

[Regarding Number of Points for Detection] Although in the above-mentioned embodiment, a predetermined number of points for detection is set for each frame, the number of points for detection for each frame may be varied in a manner that depends on the vehicle speed. In this case, the value of the number of points for detection may be made smaller in inverse proportion to the vehicle speed.

[Regarding Application to Full-Active Suspension and Semi-Active Suspension]

If the suspension system 60 is a full-active suspension, the arithmetic processing circuit 20 outputs a result of superimposing the information about the heights h at the plurality of points for detection, which are each detected by the road surface displacement calculation unit 22 with respect to the plurality of frames, on each other while considering the movement distance of the vehicle between the plurality of frames, to the suspension system 60.

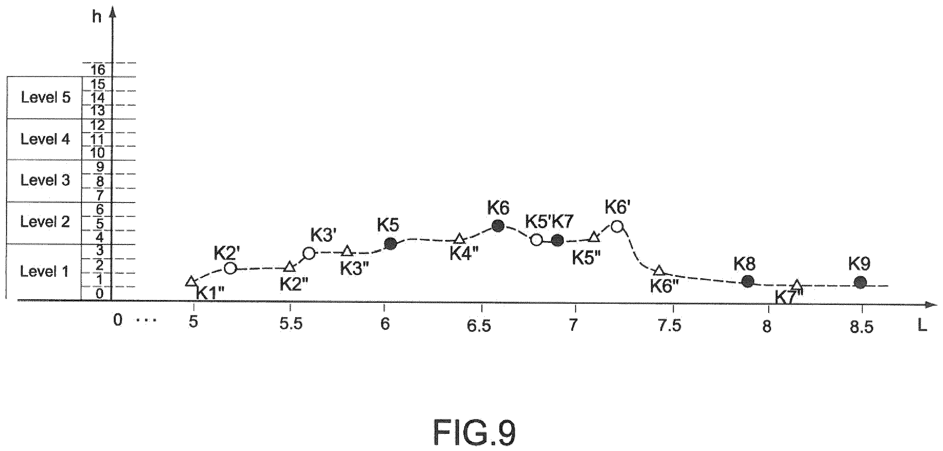

If the suspension system 60 is a semi-active suspension, the arithmetic processing circuit 20 evaluates the height h of the road surface at a plurality of rates, for example, five rates as shown in Fig. 9 in a result of superimposing the information about the heights h at the plurality of points for detection, which are each detected by the road surface displacement calculation unit 22 with respect to the plurality of frames, on each other while considering the movement distance of the vehicle between the plurality of frames, and outputs an evaluation result of the height h of the road surface together with the information about the distance L to the suspension system 60.

[Modified Example 1 of Height Calculation Method for Points for Detection]

Next, the calculation method for the heights of the points for detection on the road surface in a case where the directions of the optical axes 11R, 11L of the cameras 10R, 10L have an angle with respect to a horizontal line will be described.

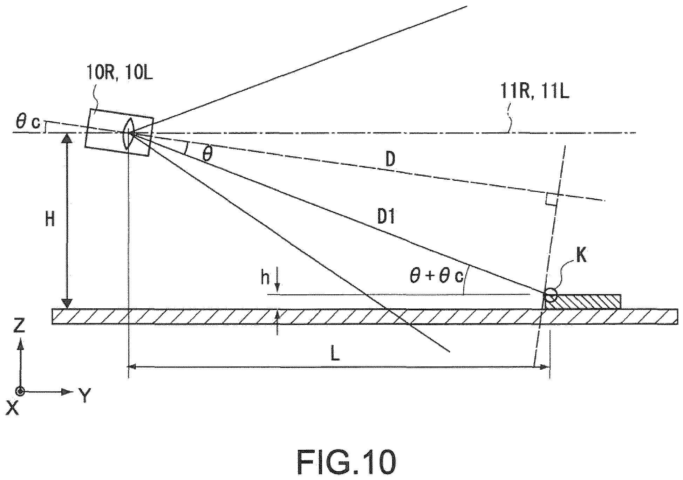

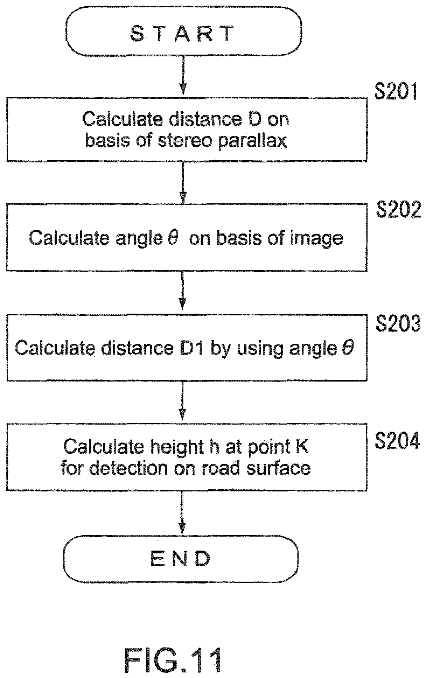

Fig. 10 is an explanatory diagram of a modified example 1 of this height calculation method for the points for detection. Fig. 11 is a flowchart of the modified example 1 of this height calculation method.

Here, $\theta c$ denotes a mounting angle from the horizontal line of the stereo camera and $\theta$ denotes an angle with respect to the directions of the optical axes 11R, 11L of the cameras 10R, 10L in a direction in which the point for detection K of the road surface can be seen. D denotes a distance between the stereo camera and the point for detection K when a mounting angle $\theta c$ is not considered. D1 denotes a distance between the stereo camera and the point for detection K when the mounting angle $\theta c$ is considered. H denotes the height of the cameras 10R, 10L from the road surface.

First of all, the arithmetic processing circuit 20 calculates D by using Expression (1) as described above on the basis of the image taken by the stereo camera (Step S201).

Subsequently, the arithmetic processing circuit 20 calculates θ on the basis of the position of the point for detection K of the road surface in the Y-axis direction from the image (Step S202), and calculates D1 in accordance with Expression (4) as follows by using θ (Step S203).

$$D1 = D/\cos\theta \qquad \ldots (4)$$

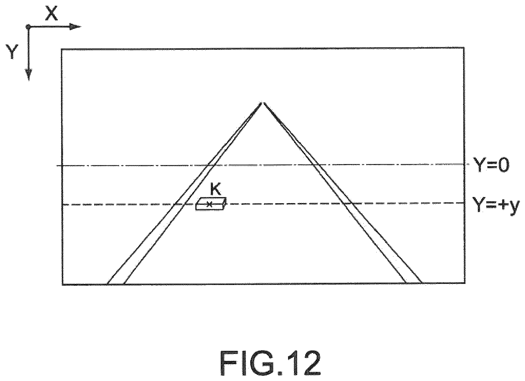

θ is calculated from the image taken by the stereo camera. For example, as shown in Fig. 12, when in the image, the point for detection K is at a position spaced apart downwards by a +y line from a middle position (Y = 0) in the Y-axis direction, θ is approximately determined in accordance with Expression (5) as follows.

$$\theta = y \times \Delta\theta \qquad \ldots (5)$$

Here, Δθ denotes an angle corresponding to one line of the image.

Then, the arithmetic processing circuit 20 calculates the point for detection K on the height h of the road surface in accordance with Expression (6) as follows (Step S204).

$$h = H - D1*\sin(\theta + \theta c) \qquad \ldots (6)$$

[Modified Example 2 of Height Calculation Method for Points for Detection]

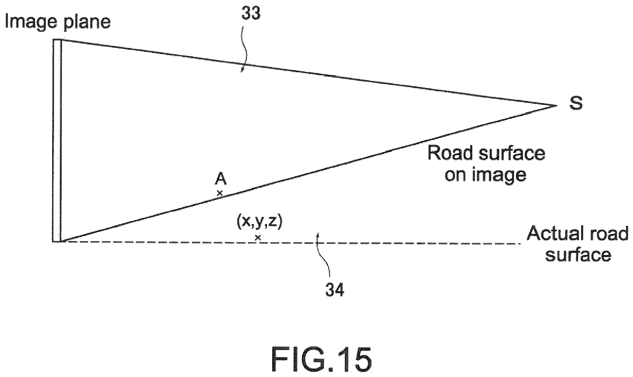

The calculation method for θ above is a simple arithmetic operation, and thus has an advantage that it does not impose a large load on the arithmetic processing circuit 20. Meanwhile, it does not consider a geometrical difference between the road surface on the image and the road surface in a real space, and thus it has a disadvantage that an error occurs correspondingly. In particular, as the distance from the stereo camera to the point for detection K becomes longer, the error increases. In view of this, a modified example 2 of the height calculation method for the points for detection in which a highly accurate road surface displacement profile can be obtained by obtaining θ while considering the road surface plane in the real space although an arithmetic load increases in comparison with the modified example 1 above will be described with reference to Figs. 10, 13, 14, and 15.

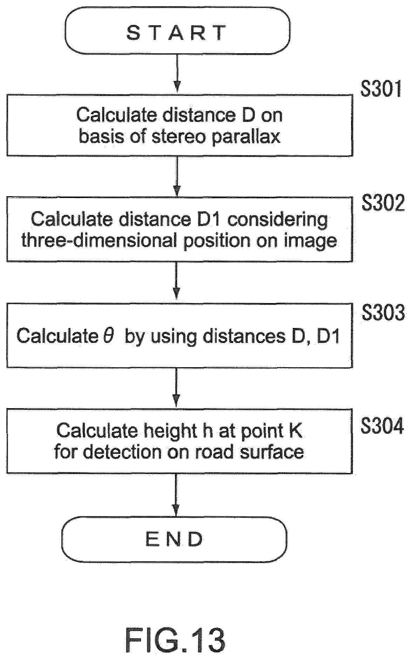

Fig. 13 is a flowchart of the modified example 2 of this height calculation method.

First of all, the arithmetic processing circuit 20 calculates D by using Expression (1) as described above on the basis of an image taken by the stereo camera (Step S301).

Subsequently, the arithmetic processing circuit 20 calculates a distance D1 between the stereo camera and the point for detection K while considering a position of the point for detection K on the image in a three-dimensional space (Step S302).

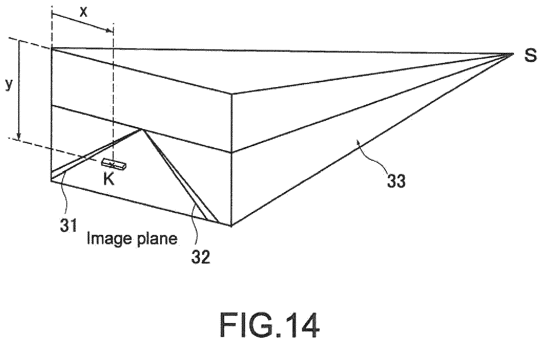

More specifically, as shown in Fig. 14, the arithmetic processing circuit 20 detects a plurality of actually parallel, straight lines 31, 32 from edge components of the image and detects a vanishing point S at which a larger number of straight lines 31, 32 cross each other. The coordinates of the point for detection K in a space 33 having a square pyramid shape with this vanishing point S as a vertex can be converted into coordinates (x, y, z) of a three-dimensional space 34 of a rectangular coordinate system.

In view of this, the arithmetic processing circuit 20 converts the coordinates of the point for detection K in the reference image taken by the stereo camera into the coordinates of the three-dimensional space. Here, provided that the coordinates of the three-dimensional space of the point for detection K are (x, y, z), a parallax Ds can be calculated in accordance with Expression (7) as follows while considering the three-dimensional space.

$$Ds = (x^2 + y^2 + z^2)^{1/2} \qquad \ldots (7)$$

After that, the arithmetic processing circuit 20 calculates the distance D1 by using the value of the parallax Ds. This distance D1 is calculated by substituting the value of the parallax Ds for the parallax (x1-x2) of Expression (1) as described above.

Next, the arithmetic processing circuit 20 calculates θ (Step S303). θ is calculated in accordance with Expression (8) as follows.

$$\theta = \cos^{-1}(D/D1) \qquad \ldots (8)$$

After that, the arithmetic processing circuit 20 calculates the point for detection K on the height h of the road surface in accordance with the above Expression (6) (Step S304).

In accordance with this calculation method, although the arithmetic load increases in comparison with the former calculation method, $\theta$ can be obtained while considering the road surface plane in the real space, and a highly accurate road surface displacement profile can be obtained.

[Others]

The present invention is not limited to the above-mentioned embodiment and various modifications can be made without departing from the scope of the technological concept of the present invention.

Although in the above-mentioned embodiment, the points for detection are set only on the predictive tire traveling tracks of the vehicle, the present invention is not necessarily limited to the combination with such a configuration. That is, the points for detection do not need to be set only on the predictive tire traveling tracks of the vehicle.

In a case where the vehicle travels backwards, the distance information of each of the points for detection of the road surface displacement information saved in the memory 30 may be offset by a distance by which it travels backwards. Alternatively, the road surface displacement information saved in the memory 30 may be deleted and the road surface displacement information may be generated from a first frame.

In addition, the road surface displacement detection device and the road surface displacement detection method according to the present invention can be applied not only to the vehicle traveling the road surface but also an apparatus, a robot, and the like for various types of transportation which move on a traveling surface such as a floor in a room. Furthermore, the road surface displacement detection device and the road surface displacement detection method according to the present invention can be applied to another object as long as it is a movable object.

Reference Signs List

1 road surface displacement detection device
10 stereo camera
20 arithmetic processing circuit
21 image processing unit
22 road surface displacement calculation unit
30 memory
40 vehicle speed sensor
50 steering angle sensor
60 suspension system

**Claims**

1. A road surface displacement detection device, comprising:

    a stereo camera that images a road surface in a movement direction of an object; and
    an arithmetic processing circuit that detects, for each frame of an image obtained by the stereo camera, heights of the road surface at a plurality of points for detection at different distances from the stereo camera and superimposes information about the heights at the plurality of points for detection, which are each detected for a plurality of frames, on each other while considering a movement distance of the object between the plurality of frames.

2. The road surface displacement detection device according to claim 1, wherein
the arithmetic processing circuit is configured to detect heights of a plurality of points for detection from the road surface on a predictive movement track of the object.

3. The road surface displacement detection device according to claim 1, wherein

the arithmetic processing circuit is configured to give priority to information about a height detected from a latest frame when superimposing the information about the heights of the plurality of points for detection, which are each detected for the plurality of frames, on each other while considering the movement distance of the object between the plurality of frames.

4. The road surface displacement detection device according to claim 1, wherein
the arithmetic processing circuit is configured to vary a cycle of the frame on a basis of the movement speed of the object.

5. The road surface displacement detection device according to claim 1, wherein
the arithmetic processing circuit is configured to vary the number of points for detection for each frame on a basis of the movement speed of the object.

6. The road surface displacement detection device according to claim 1, wherein
the arithmetic processing circuit is configured to

calculate, on a basis of a parallax of a plurality of images taken by the stereo camera, a distance D between the stereo camera and the point for detection while not considering a mounting angle θc of the stereo camera in a two-dimensional space of a height and a distance,
calculate an angle θ forming an optical axis of the stereo camera and a straight line obtained by linking the stereo camera and the point for detection in the two-dimensional space,
calculate a distance D1 between the stereo camera and the point for detection while considering the mounting angle θc in the two-dimensional space by using the distance D and the angle θ, and
calculate a height of the road surface at the point for detection by using a height of the stereo camera from the road surface, the distance D1, the mounting angle θc, and the angle θ.

7. The road surface displacement detection device according to claim 1, wherein
the arithmetic processing circuit is configured to

calculate, on a basis of a parallax of a plurality of images taken by the stereo camera, a distance D between the stereo camera and the point for detection while not considering a mounting angle θc of the stereo camera in a two-dimensional space of a height and a distance,
calculate a distance D1 between the stereo camera and the point for detection while considering a position of the point for detection on the image in a three-dimensional space,
calculate an angle θ formed by an optical axis of the stereo camera and a straight line obtained by linking the stereo camera and the point for detection in the two-dimensional space, on a basis of the calculated distance D and the calculated distance D1,
and
calculate a height of the road surface at the point for detection by using a height of the stereo camera from the road surface, the distance D1, the mounting angle θc, and the angle θ.

8. A suspension control method, comprising:

detecting, for each frame of a plurality of images obtained in synchronization with each other by a stereo camera that images a road surface in front of a vehicle, heights of the road surface at a plurality of points for detection at different distances from the stereo camera;
superimposing information about the heights at the plurality of points for detection, which are each detected for a plurality of frames, on each other while considering a movement distance of the vehicle between the plurality of frames; and
controlling a suspension of the vehicle on a basis of the information about the heights, which is superimposed on each other.

FIG.1

FIG.2

60 Suspension system

50 Steering angle sensor

40 Vehicle speed sensor

20 Arithmetic processing circuit

21 Road surface displacement calculation unit

22 Calculation of coordinates of predictive tire travelling track

Road surface displacement calculation

Image processing unit

Image distortion correction

Filtering

Parallax calculation

30 Memory

10 Stereo camera

Camera 10R

Camera 10L

FIG.3

X

Y

61R        61L

FIG.4

K10
K9
K8
K7
K6
K5
K4
K3
K2
K1

Y

X

61R        61L

FIG.5

FIG.6

EP 3 438 603 A1

START

S101 Calculate parallax information

S102 Calculate coordinates of plurality of points for detection on predictive tire travelling tracks

S103 Detection of road surface displacement from first frame?

YES → S104 Calculate distance L of each point for detection and height h of road surface

S105 Save calculated distance L and calculated height h of road surface as road surface displacement information

NO → S106 Measure vehicle speed and acquire frame rate

S107 Calculate distance by which vehicle travels between frames

S108 Offset saved road surface displacement information by calculated distance

S109 Calculate distance L and height h of road surface on basis of parallax information at each point for detection

S110 Equal to distance L of point for detection?

NO → S111 Add road surface displacement information of new point for detection

YES → S112 Is height h of road surface "0"?

YES → (to S114)

NO → S113 Overwrite with information regarding height h of road surface at new point for detection

S114 Complete processing on all points for detection?

NO → (back to S109)

YES → END

FIG.7

FIG.8A

● : Information about points for detection calculated from first frame (K3-K10)

○ : Information about points for detection calculated from second frame (K1'-K10')

h

16
15
14
13
12
11
10
9
8
7
6
5
4
3
2
1
0

E

K3  K2'  K5  K6  K7
K1'  K4  K3'  K4'  K5'  K6'
K7'  K8'  K9'  K10'
K8  K9  K10

0 ··· 5   5.5   6   6.5   7   7.5   8   8.5   9   9.5   10  L

R (real value of road surface displacement amount)

# FIG.8B

EP 3 438 603 A1

● : Information about points for detection calculated from first frame (K5-K10)

○ : Information about points for detection calculated from second frame (K3'-K10')

△ : Information about points for detection calculated from third frame (K1"-K10")

FIG.8C

FIG.9

FIG.10

START

Calculate distance D on
basis of stereo parallax

S201

Calculate angle $\theta$ on basis of image

S202

Calculate distance D1 by using angle $\theta$

S203

Calculate height h at point K
for detection on road surface

S204

END

FIG.11

FIG.12

START

Calculate distance D on
basis of stereo parallax — S301

Calculate distance D1 considering
three-dimensional position on image — S302

Calculate $\theta$ by using distances D, D1 — S303

Calculate height h at point K
for detection on road surface — S304

END

FIG.13

**FIG.14**

Image plane

33

S

Road surface
on image

A
×

(x,y,z)
×

Actual road
surface

34

# FIG.15

## INTERNATIONAL SEARCH REPORT

| | International application No. |
|---|---|
| | PCT/JP2017/006867 |

| A. CLASSIFICATION OF SUBJECT MATTER |
|---|
| G01B11/245(2006.01)i, B60G23/00(2006.01)i, G01B11/30(2006.01)i, G06T1/00 (2006.01)i |

According to International Patent Classification (IPC) or to both national classification and IPC

| B. FIELDS SEARCHED |
|---|
| Minimum documentation searched (classification system followed by classification symbols) |
| G01B11/00-11/30, G01C3/00-3/32, B60G23/00, G06T1/00 |

Documentation searched other than minimum documentation to the extent that such documents are included in the fields searched
Jitsuyo Shinan Koho      1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>A | JP 2004-144644 A (Fuji Heavy Industries Ltd.),<br>20 May 2004 (20.05.2004),<br>paragraphs [0002], [0014] to [0017], [0025],<br>[0026], [0033], [0038] to [0041], [0056]<br>(Family: none) | 1<br>3,8<br>2,4-7 |
| Y<br>A | WO 2015/159835 A1 (Sharp Corp.),<br>22 October 2015 (22.10.2015),<br>paragraph [0164]<br>(Family: none) | 3<br>1,2,4-8 |
| Y<br>A | WO 2013/145015 A1 (Toyota Motor Corp.),<br>03 October 2013 (03.10.2013),<br>paragraph [0033]<br>& US 2015/0088378 A1<br>paragraph [0037]<br>& CN 104220317 A | 8<br>1-7 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 May 2017 (11.05.17) | 23 May 2017 (23.05.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014089548 A